# EUROPEAN PATENT APPLICATION

(11) **EP 4 851 589 A1**
(43) Date of publication of application: **09.12.2026**
(21) Application number: 25180417.5
(22) Date of filing: 03.06.2025
(51) Int. Cl.: G01J 3/28, G01J 3/44

(54) **APPARATUS AND METHOD FOR NEAR-INFRARED SPECTROSCOPY**

(71) Applicant: Infineon Technologies AG, 85579 Neubiberg (DE)
(72) Inventor: LEITNER, Raimund, 9500 Villach (AT); SCHICKBICHLER, Wolfgang, 8605 Kapfenberg (AT); BERGER, Armin, 8041 Graz (AT); BESHINSKI, Krum, 8101 Gratkorn (AT)
(74) Representative: 2SPL Patentanwälte PartG mbB

(57) **Abstract**

Provided is an apparatus for Near-InfraRed (NIR) spectroscopy. The apparatus includes an illumination source configured to emit, for a plurality of measurement cycles in a measurement frame, modulated NIR light for interaction with a sample. Additionally, the apparatus includes a pixel arrangement. The pixel arrangement includes at least one photo-sensitive pixel. The pixel arrangement includes a first charge storage and a second charge storage having respective charge levels configured to vary in response to interactions with charge carriers generated by the pixel arrangement. The charge carriers are controlled by the pixel arrangement to interact with the charge storages in response to the modulated NIR light based on a control signal. The control signal is configured to control the pixel arrangement in each measurement cycle to cause the charge carriers to a) vary the charge level of the first charge storage during emission of the modulated NIR light for measuring a result of the interaction of the modulated NIR light with the sample; and b) vary the charge level of the second charge storage in absence of emission of the modulated NIR light.

## Description

### Field

The present disclosure relates to Near-InfraRed (NIR) spectroscopy. In particular, examples of the present disclosure relate to an apparatus and a method for NIR spectroscopy

### Background

NIR spectroscopy is a well-established analytical technique used to detect and quantify specific molecular components based on their absorption and scattering characteristics in the NIR region. This technology has found applications in diverse fields such as medical diagnostics. Despite its broad utility, practical implementation of NIR spectroscopy remains challenging.

A significant hurdle is that the desired NIR signal is inherently weak and is easily obscured by ambient and stray light. Conventional NIR systems typically rely on expensive, high-performance imaging sensors and complex optical filtering to separate the NIR signal from the overwhelming background illumination. Such solutions are not only costly but also impractical for wearable or consumer-grade devices.

Hence, there may be a desire for improved NIR spectroscopy.

### Summary

This demand is met by the subject-matter of the independent claims. Further embodiments are addressed by the dependent claims.

According to a first aspect, the present disclosure provides an apparatus for NIR spectroscopy. The apparatus comprises an illumination source configured to emit, for a plurality of measurement cycles in a measurement frame, modulated NIR light for interaction with a sample. Additionally, the apparatus comprises a pixel arrangement. The pixel arrangement comprises at least one photo-sensitive pixel. The pixel arrangement comprises a first charge storage and a second charge storage having respective charge levels configured to vary in response to interactions with charge carriers generated by the pixel arrangement. The charge carriers are controlled by the pixel arrangement to interact with the charge storages in response to the modulated NIR light based on a control signal. The control signal is configured to control the pixel arrangement in each measurement cycle to cause the charge carriers to a) vary the charge level of the first charge storage during emission of the modulated NIR light for measuring a result of the interaction of the modulated NIR light with the sample; and b) vary the charge level of the second charge storage in absence of emission of the modulated NIR light.

According to a second aspect, the present disclosure provides a handheld or wearable device comprising an apparatus for NIR spectroscopy according to the first aspect.

According to a third aspect, the present disclosure provides a method for NIR spectroscopy using a pixel arrangement. The pixel arrangement comprises at least one photo-sensitive pixel. The pixel arrangement comprises a first charge storage and a second charge storage having respective charge levels configured to vary in response to interactions with charge carriers generated by the pixel arrangement. The method comprises emitting, for a plurality of measurement cycles in a measurement frame, modulated NIR light for interaction with a sample. The charge carriers are controlled by the pixel arrangement to interact with the charge storages in response to the modulated NIR light based on a control signal. Additionally, the method comprises controlling the pixel arrangement via the control signal in each measurement cycle to cause the charge carriers to a) vary the charge level of the first charge storage during emission of the modulated NIR light for measuring a result of the interaction of the modulated NIR light with the sample; and b) vary the charge level of the second charge storage in absence of emission of the modulated NIR light.

According to a fourth aspect, the present disclosure provides use of the apparatus according to the first aspect, the handheld or wearable device of the second aspect, or the method of the third aspect for determining a physiological property of an organism.

### Brief description of the Figures

Some examples of apparatuses and/or methods will be described in the following by way of example only, and with reference to the accompanying figures, in which
Fig. 1 schematically illustrates an example of an apparatus for NIR spectroscopy;
Fig. 2 illustrates an exemplary timing diagram;
Fig. 3 schematically illustrates an exemplary pixel arrangement;
Fig. 4 schematically illustrates an exemplary handheld or wearable device; and
Fig. 5 illustrates a flowchart of an example of a method for NIR spectroscopy.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A or B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

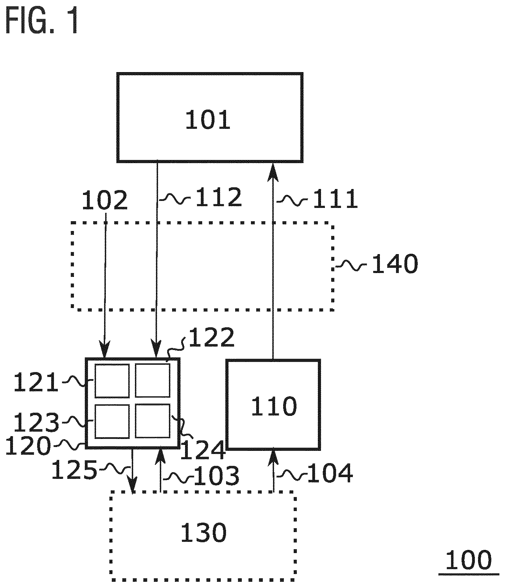

**Fig. 1** schematically illustrates an apparatus 100 for NIR spectroscopy.

The apparatus 100 comprises an illumination source (light source, light emitting component) 110. The illumination source 110 may, e.g., comprise or be one or more Light-Emitting Diode (LED) or laser diode such as a Vertical-Cavity Surface-Emitting Laser (VCSEL) or an Edge-Emitting Laser (EEL). A VCSEL may be used for the illumination source 110 due to its compact size, high efficiency, and directed light output. However, it should be noted that the present disclosure is not limited thereto. Other types of light sources may be used as well.

The illumination source 110 is configured to emit, for a plurality of measurement cycles in a (first) measurement frame, modulated NIR light 111 for interaction with a sample 101. For example, the emission of the modulated NIR light 111 may be driven based on a drive signal 104 (with arbitrary waveform, in particular rectangular). The illumination source 110 may either directly receive the drive signal 104 and control emission of the modulated NIR light 111 based thereon, or intermediate drive circuitry (not illustrated) may receive the drive signal 104 and drive the light source 110 based thereon. The illumination source 110 may be configured to emit the modulated NIR light 111 throughout the entire respective measurement cycle.

The sample 101 is a material or object subjected to NIR spectroscopy by the apparatus 100. The sample 101 may, e.g., include biological materials, such as foodstuff, tissues or fluids from an organism, or non-biological materials, such as beverages or chemical substances, whose characteristics are to be analyzed based on NIR spectroscopy.

The modulated NIR light 111 is NIR light that is not emitted continuously but is instead turned on and off - or its intensity is varied - in a controlled, repetitive manner during the respective measurement cycle. The modulation frequency (e.g., frequency of turning the NIR light 111 on and off) may be constant over the measurement frame or vary (e.g., vary equally in each measurement cycle). For example, the modulation frequency may be between 0.5 MHz and 1 GHz. The modulated NIR light 111 may, e.g., exhibit a wavelength between 780 nm and 1100 nm, in particular 939 nm and 970 nm. In some examples, the modulated NIR light 111 may comprise wavelengths outside the NIR spectrum.

During the periods when the modulated NIR light 111 is on (emitted), it interacts with the sample 101, causing specific molecular absorptions or scattering effects. This interaction produces a (e.g. weak but distinct) measurable light 112 that is directly linked to the sample 101's properties. For example, the light 112 may be transmitted light that passed through the sample 101. Transmitted light may reveal information about the sample 101's internal composition and density, as different molecules absorb varying amounts of light at specific NIR wavelengths. In other examples, the light 112 may be reflected light that is reflected off the surface of the sample 101. Reflected light may provide insights into surface characteristics and texture of the sample 101. In still other examples, the light 112 may be transflected light. Transflection is a combination of transmission and reflection, where the modulated NIR light 111 light enters the sample 101, reflects off an internal layer or backing, and then exits. Transflected light may allow for analysis of both surface and subsurface properties of the sample 101, and be particularly useful for layered samples or those with a reflective substrate. The light 112 is, hence, the result of the interaction of the modulated NIR light 111 with the sample 101. The light 112 caused by the interaction of the modulated NIR light 111 with the sample 101 may in the following be denoted as "NIR spectroscopy light" or "NIR spectroscopy signal".

The measurement frame is a discrete time interval in which the apparatus 100 performs light emission and sensing for NIR spectroscopy. For example, a duration tₑₓₚ of the measurement frame may be 100 ms (milliseconds) or more, 250 ms or more, 500 ms or more, or 750 ms or more. On the other hand, the duration tₑₓₚ of the measurement frame may be 1000 ms or less, 750 ms or less, 500 ms or less, 250 ms or less, or 100 ms or less.

The measurement frame comprises (is formed by) one or more (e.g., a plurality of) measurement cycles. The measurement cycles are discrete operational phases within the measurement frame during which the apparatus 100 emits the modulated NIR light 111 and measures the NIR spectroscopy light 112 resulting from the interaction of the modulated NIR light 111 with the sample 101. The measurement cycle may be repeated multiple times within the measurement frame to enable cumulative signal acquisition for NIR spectroscopy. In general, any number N ≥ 1 of measurement cycles may be used. For example, the measurement frame may comprise 10 or more, 50 or more, 100 or more, 250 or more, 500 or more, or 750 or more measurement cycles. On the other hand, the measurement frame may comprise 1000 or less, 750 or less, 500 or less, 250 or less, or 100 or less measurement cycles. The duration *t_{c}* of a single measurement cycle may, hence, be *t_{c} = tₑₓₚ*/*N* (assuming equal lengths of the measurement cycles and accordingly a constant number of emitted pulses of the NIR light 111 per measurement cycle). In other examples, the durations of the plurality of measurement cycles may vary. Accordingly, the number of emitted pulses of the NIR light 111 per measurement cycle may vary. Also the timing or configuration of the measurement may vary (i.e., not all measurement cycles need to be identical).

Apart from the desired NIR spectroscopy light 112 resulting from the interaction of the modulated NIR light 111 with the sample 101, undesired light components such as background (ambient and/or stray) light 102 are received. As will be described in the following in greater detail, the apparatus 100 is configured to measure the incident NIR spectroscopy light 112 by suppressing the incident background (ambient and/or stray) light 102. The apparatus 100 comprises a pixel arrangement 120. The pixel arrangement 120 may be understood as an imager configured to capture and process incident light in a way that enhances the (weak) NIR spectroscopy light 112 while suppressing the incident background light 102.

The pixel arrangement 120 comprises at least one photo-sensitive pixel. In the example of Fig. 1, two photo-sensitive pixels 121 and 122 are illustrated to highlight the structure and the operating principle of the apparatus 100. However, it should be noted be that the present disclosure is not limited thereto. The pixel arrangement 120 may comprise any number M ≥ 1 of photo-sensitive pixels. The at least one photo-sensitive pixel 121, 122 may be a semiconductor device capable of converting incident light into charge carriers (e.g., electrons). For example, the at least one photo-sensitive pixel 121, 122 may be or comprise a Photonic Mixer Device (PMD), a Charge-Coupled Device (CCD), a Complementary Metal-Oxide-Semiconductor (CMOS) image sensor pixel or a Single Photon Avalanche Diode (SPAD). The at least one photo-sensitive pixel 121, 122 may be sensitive to the optical wavelengths of the modulated NIR light 111.

The pixel arrangement 120 further comprises a first charge storage 123 and a second charge storage 124. The charge storages 123 and 124 may, e.g., be capacitors or wells (e.g., deep N-wells or P-wells) within the pixel arrangement 120. The charge storages 123 and 124 may be integrated into one of the at least one photo-sensitive pixel 121, 122 in some examples. In other examples, the charge storages 123 and 124 may be elements separate from the at least one photo-sensitive pixel 121, 122.

The two charge storages 123 and 124 have respective charge levels configured to vary in response to interactions with charge carriers generated by the pixel arrangement 120. In other words, each of the two charge storages 123 and 124 has an associated charge level, represented as an electrical potential (voltage) that directly correlates to the number of accumulated charge carriers (e.g., electrons). The at least one photo-sensitive pixel 121, 122 generates charge carriers (e.g., electrons) in response to incident photons (incident light) arriving at the at least one photo-sensitive pixel 121, 122. The charge carriers are controlled by the pixel arrangement 120 to interact with the charge storages 123 and 124 in response to the modulated NIR light 111 based on a control signal 103. In other words, the generated charge carriers are managed or routed by the pixel arrangement 120 based on the control signal 103. The movement and collection into the first and second charge storages 123 and 124 are not arbitrary but controlled via the control signal 103. The generated charge carriers are routed into either the first or second charge storage 123, 124 by the pixel arrangement 120 as will be described later in greater detail. For example, the pixel arrangement 120 may comprise electronic elements such as transistors, gates or switches, or generate electrical fields within the pixel arrangement 120 (e.g., with a semiconductor structure of the pixel arrangement) that actively control, based on the control signal 103, whether the charge carriers are directed toward one or the other charge storage. Thus, the "interaction" may be understood as essentially the controlled routing of the charge carriers into the charge storages 123 and 124 to accumulate and measure charge. The control signal 103 defines when and how the charge carriers should be routed or collected in the different charge storages 123 and 124. It effectively acts as a timing and switching reference. The charge carriers routed to one of the two charge storages 123 and 124 vary (change, modify) the charge level or voltage of the respective charge storage (e.g., the charge level or voltage may be decreased). The charge levels of both charge storages 123 and 124 are identical at the beginning of measurement frame (e.g., the charge levels are at a predetermined reset charge level).

In particular, the control signal 103 is configured to control the pixel arrangement 120 in each measurement cycle to cause the charge carriers to:
a) vary the charge level of (e.g., only, exclusively) the first charge storage 123 during emission of the modulated NIR light 111 for measuring the result of the interaction of the modulated NIR light 111 with the sample 101 (i.e., for measuring the NIR spectroscopy light 112); and
b) vary the charge level of (e.g., only, exclusively) the second charge storage 124 in absence of emission of the modulated NIR light 111.

During emission of the modulated NIR light 111, the NIR spectroscopy light 112 reflected, transmitted, or otherwise received from the sample 101 strikes the at least one photo-sensitive pixel 121, 122 and generate charge carriers. The control signal 103 routes the generated charge carriers to (e.g., only, exclusively) the first charge storage 123 during this active illumination period, ensuring that the charge carriers caused by the interaction of the modulated NIR light 111 with the sample 101 directly vary (e.g., decrease voltage as charges accumulate) the charge level of (e.g., only, exclusively) the first storage 123. In other words, the control signal 103 controls the pixel arrangement 120 to generate a field that exerts a force dragging (pulling) the charge carriers (e.g., only, exclusively) toward the first charge storage 123 during the first phase, ensuring that charge carriers resulting from the by the interaction of the modulated NIR light 111 with the sample 101 directly vary the charge level of (e.g., only, exclusively) the first charge storage 123. Accordingly, the first storage 123 primarily records the NIR spectroscopy light 112 caused by the interaction of the modulated NIR light 111 with the sample 101 (plus the unavoidable background light 102).

The control signal 103 further routes charge carriers generated in absence of emission of the modulated NIR light 111 to (e.g., only, exclusively) the second charge storage 124. In other words, only when the modulated NIR illumination source 110 is turned off and does not emit the NIR light 111, charge carriers generated in the at least one photo-sensitive pixel 121, 122 are routed to the second charge storage 124. In still other words, the control signal 103 controls the pixel arrangement 120 to generate a field that exerts a force dragging (pulling) the charge carriers (e.g., only, exclusively) toward the second charge storage 124 in absence of emission of the modulated NIR light 111. During these "off" periods, the at least one photo-sensitive pixel 121, 122 continues to receive the background light 102, which results from environmental lighting conditions (room lights, sunlight, reflections, etc.).

Controlling the pixel arrangement 120 via the control signal 103 as described above enables temporal isolation of the NIR spectroscopy light 112 from the background light 102. As the NIR spectroscopy light 112 occurs basically only during the emission of the modulated NIR light 111, capturing of the charge carriers in (e.g., only, exclusively) the first charge storage 123 during the emission of the modulated NIR light 111 allows to integrate the NIR spectroscopy light 112 into (e.g., only, exclusively) first storage 123. The background light 102 is stored in both charge storages 123 and 124 during the measurement frame. Both charge storages 123 and 124 integrate the background light 102 similarly (common mode), meaning this unwanted signal appears almost equally in both charge storages 123 and 124. Hence, when looking at the charge level or voltage difference between both charge storages 123 and 124, these common unwanted background signal effectively cancels out, isolating the NIR spectroscopy signal caused by the interaction of the modulated NIR light 111 with the sample 101. The differential measurement significantly enhances the Signal-to-Noise Ratio (SNR) by removing noise components common to both charge storages 123 and 124, thus amplifying the relative visibility of the NIR spectroscopy signal caused by the interaction of the modulated NIR light 111 with the sample 101. Because the background light 102 varies slowly and appears similarly in both charge storages 123 and 124, fluctuations in this component minimally affect the charge level or voltage difference between both charge storages 123 and 124.

The apparatus 100 enables a time-gated signal capture and isolation of the NIR spectroscopy light 112 caused by the interaction of the modulated NIR light 111 with the sample 101. Accordingly, the apparatus 100 enables accurate signal detection. The apparatus 100 may be implemented using existing sensor technologies, such as CMOS, CCD or PMD-based pixel designs. This may reduce the cost and complexity of manufacturing compared to expensive scientific cameras or advanced filters. Furthermore, the apparatus 100 may be compact compared to conventional architectures like scientific cameras making it suitable for compact, cost-efficient applications such as handheld and wearable devices (e.g., mobile phones, tablet-computers, smart watches or other wearable devices).

The pixel arrangement 120 may be configured to retain the charge levels of the charge storages 123 and 124 at the end of each measurement cycle and use them as starting charge levels for the following measurement cycle. In other words, the charges are not reset to zero or the reset charge level after each measurement cycle. At the beginning of the next measurement cycle within the same measurement frame, these previously retained charge levels serve as starting points or baseline levels. In other words, each subsequent measurement cycle builds upon the accumulated charges from prior measurement cycles, continuously integrating photon-generated charge carriers throughout multiple cycles of one measurement frame. The charge carriers accumulated over each measurement cycle within a measurement frame are cumulative. The pixel arrangement 120, thus, inherently integrates the photons/incident light received throughout multiple measurement cycles, effectively amplifying the weak NIR spectroscopy light 112 caused by the interaction of the modulated NIR light 111 with the sample 101, and improving signal clarity. Weak NIR spectroscopy light 112, which may be difficult to distinguish from noise in a single short measurement cycle, may be accumulated progressively over several measurement cycles. This cumulative process substantially improves the sensitivity and detectability of very faint signals caused by the interaction of the modulated NIR light 111 with the sample 101. By using cumulative integration rather than resetting after each measurement cycle, the apparatus 100 may inherently average out random fluctuations (noise) over time, improving the effective SNR and thus increasing the quality and detectability of the NIR spectroscopy signal.

To improve signal quality and/or the SNR, the timing of the control signal 103 may derived from the timing of the modulated NIR light 111. Delay times, longer/shorter periods or arbitrarily changed timing characteristics including time periods where none of the two charge storages 123 and 124 receives charge carriers (drain gate/mode) may be considered when generating the control signal 103 based on the timing of the modulated NIR light 111.

According to examples, the apparatus 100 may comprise optics 140. The optics 140 may be configured to focus the modulated NIR light 111 onto the sample 101. The optics 140 may be arranged between the illumination source 110 and the sample 101. By focusing the modulated NIR light 111, the photon density at the sample 101 may be increased, which boosts the probability of interaction between the modulated NIR light 111 and the sample 101. For example, the optics 140 may be configured to concentrate the modulated NIR light 111 onto a (e.g., small) defined area of the sample 101. Tightly focused modulated NIR light may ensure that only a specific region of the sample 101 is illuminated, improving the precision of the NIR spectroscopy measurement.

Alternatively or additionally, the optics 140 may be configured to focus incident light (including the light 112 and the background light 102) onto the at least one photo-sensitive pixel 121, 122. As described above, the at least one photo-sensitive pixel 121, 122 is configured to generate the charge carriers based on the incident light. In other words, the optics 140 may be configured to collect the light 112 caused by the interaction of the modulated NIR light 111 with the sample 101, and focus it (precisely) onto the at least one photo-sensitive pixel 121, 122. Focusing ensures improved efficiency in capturing the photons that form the measurement signal. Efficient collection and focusing is beneficial to maximize detection sensitivity.

In case the pixel arrangement 120 comprises multiple photo-sensitive pixels, the optics 140 may be configured to direct different wavelengths of the incident light onto different ones of the multiple photo-sensitive pixels. In other words, the optics 140 may be configured to spatially separate the photons of the incident light according to their wavelengths. Each wavelength of the NIR spectroscopy light 112 may be thus directed onto a distinct area or photo-sensitive pixel of the pixel arrangement 120. Consequently, different photo-sensitive pixels of the pixel arrangement 120 detect photons of the incident light at different NIR wavelengths, allowing direct measurement of the NIR spectrum. To support this measurement approach, the pixel arrangement 120 may include multiple pairs of charge storages corresponding to the multiple photo-sensitive pixels, wherein the charge levels of each pair of storages are varied by charge carriers generated specifically by photons detected at their respective wavelengths - analogously to what is described herein for the charge storages 123 and 124. The voltage differences measured between each pair of charge storages therefore represent intensity values at specific wavelengths, collectively forming the NIR spectrum of the sample 101. Accordingly, the pixel arrangement 120 may measure voltage differences representing intensity values of the NIR spectroscopy light 112 at different (specific) wavelengths in parallel.

The optics 140 may comprise various optical elements such as at least one collimator for collimating the modulated NIR light 111 and/or at least one focusing element (e.g., one or more lenses or lens systems) for focusing/concentrating the modulated NIR light 111 onto the sample 101 and/or at least one focusing element (e.g., one or more lenses or lens systems) for focusing/concentrating the incident light onto the at least one photo-sensitive pixel 121, 122 and/or at least one dispersive element (e.g., a diffraction grating or a prism) configured to direct different wavelengths of the incident light onto different photo-sensitive pixels.

In some examples, the apparatus 100 may be configured to conduct a second measurement in a second measurement frame. The second measurement frame is subsequent to the first measurement frame described above (i.e., it follows the first measurement frame in time). Like the first measurement frame, the second measurement frame comprises a plurality of measurement cycles. The duration (length) of the second measurement frame may be equal to the duration of the first measurement frame. Accordingly, the number and duration of measurement cycles in the second measurement frame may be equal to the number and duration of the measurement cycles in the first measurement frame.

During the second measurement frame, the control signal 103 is inverted compared to the first measurement frame to control the pixel arrangement 120 to cause the charge carriers to vary the charge level of (e.g., exclusively, only) the second charge storage 124 during the emission of the modulated NIR light 111. In absence of emission of the modulated NIR light 111, the control signal 103 is configured to control the pixel arrangement 120 to the charge carriers to vary the charge level of (e.g., exclusively, only) the first charge storage 123.

While the charge carriers generated by the NIR spectroscopy light 112 are integrated into the first charge storage 123 in the first measurement frame, they are integrated into the second charge storage 124 in the second measurement frame. The second inverted measurement provides an independent but complementary measurement. By capturing two measurement frames with complementary integration timing, systematic errors like pixel asymmetries and residual artifacts caused by timing imperfections may be reduced.

According to examples, the apparatus 100 may further comprise processing circuitry 130. For example, the processing circuitry 130 may be a single dedicated processor, a single shared processor, or a plurality of individual processors, some of which or all of which may be shared, a digital signal processor (DSP) hardware, an application specific integrated circuit (ASIC), a system-on-a-chip (SoC) a neuromorphic processor or a field programmable gate array (FPGA). The processing circuitry 130 may optionally be coupled to, e.g., memory such as read only memory (ROM) for storing software, random access memory (RAM) and/or non-volatile memory. For example, the apparatus 100 may comprise memory configured to store instructions, which when executed by the processing circuitry 130, cause the processing circuitry 130 to perform the steps and methods described herein.

In particular, the processing circuitry 130 may be configured to determine a characteristic of the sample 101 based on an output 125 of the pixel arrangement 120 for at least the (first) measurement frame. The output 125 of the pixel arrangement 120 for the measurement frame may, e.g., be based on the voltage difference *Vₒᵤₜ* between the first and the second charge storage 123, 124 at the end of the measurement frame:${V}_{out} = {V}_{cs 1} - {V}_{cs 2}$ (1), with *V_{cs1}* denoting the voltage (charge level) of the charge storage 123 at the end of the measurement frame, and *V_{cs2}* denoting the voltage (charge level) of the charge storage 124 at the end of the measurement frame. The output 125 may be an analog output (e.g., an analog signal) or a digital output (e.g., digital data).

The voltages *V_{cs1}* and *V_{cs2}* represent the integrated charges, proportional to the total number of photons (signal and noise photons) received over the measurement frame. Instead of directly using the absolute signal levels (voltages or charge values) stored separately in the two charge storages 123 and 124, the difference between them after the entire measurement frame (comprising multiple measurement cycles) may be determined by the pixel arrangement 120. As described above, both charge storages 123 and 124 integrate the background light 102 similarly (common mode), meaning this unwanted signal appears almost equally in both charge storages 123 and 124. By calculating the voltage difference *Vₒᵤₜ,* this common unwanted signal effectively cancels out, isolating the NIR spectroscopy signal caused by the interaction of the modulated NIR light 111 with the sample 101. In other words, the subtraction effectively isolates the true spectroscopic interaction between the emitted modulated NIR light 111 and the sample 111 from the unwanted background light 102.

The characteristic of the sample 101 refers to a physical, chemical, or biological property of the sample 101. As described above, the output 125 may indicate voltage differences representing intensity values of the light 112 at one or more different (specific) wavelengths.

For determining the characteristic of the sample 101, the processing circuitry 130 may, e.g., be configured to compare the output 125 against known calibration curves or look-up tables relating the difference *Vₒᵤₜ* between the first and the second charge storage 123, 124 to sample characteristics. In case the output 125 indicates voltage differences for plural wavelengths, the processing circuitry 130 may be configured to determine a spectrum of the NIR spectroscopy light 112 based on the output 125, and compare the determined spectrum against known spectral signatures to determine the characteristic of the sample 101. The processing by the processing circuitry 130 may comprise various other aspects such as analog-to-digital conversion, filtering, baseline correction, normalization, smoothing, peak detection, etc.

The processing circuitry 130 enables real-time analysis and determination of relevant characteristics of the sample 101 directly within the apparatus 100, eliminating the need for external analysis equipment or post-processing steps.

In case a second measurement is performed, the processing circuitry 130 may be configured to determine the characteristic of the sample 101 based on an average determined based on (e.g., an average of) the outputs 125 of the pixel arrangement 125 for the first measurement frame and the second measurement frame. The averaging allows to cancel out systematic errors like pixel asymmetries and residual artifacts caused by timing imperfections. This improves the isolation of the NIR spectroscopy signal from the background signal. Using averaged outputs ensures robustness against transient background fluctuations, or other measurement instabilities. The averaging inherently balances out statistical variations, thus producing more stable and repeatable results. Averaging multiple complementary frames reduces random fluctuations and noise, significantly enhancing the clarity and visibility of the NIR spectroscopy light 112.

According to examples, the sample 101 may be an organism (such as a human or human tissue) and the characteristic of the sample 101 may be a physiological property of the organism. A use case for the apparatus 100 may be non-invasive in-vivo blood glucose measurement, blood vessel pattern determination (using modulated NIR light at a wavelength of 939 nm and/or 970 nm) or in-vivo blood lactate measurement (using modulated NIR light at a wavelength of 923 nm and/or 1047 nm). The apparatus 100's unique ability to effectively suppress the uncorrelated background light 102 and accurately detect the signals caused by the interaction of the modulated NIR light 111 with the sample 101 allows reliable determination of physiological parameters, such as glucose concentration or blood vessel patterns. In other words, the physiological property may be at least one of a blood glucose value or a blood vessel pattern of the organism. This capability is highly beneficial for medical applications, such as wearable devices used by diabetes patients, enhancing the usability and accuracy of health monitoring devices in real-world conditions.

It should be noted that the processing circuitry 130 is an optional element of the apparatus 100. In alternative examples, the output 125 of the pixel arrangement 120 for at least the (first) measurement frame may be processed by circuitry external to the apparatus 100 (e.g., according to the principles described above). In these examples, the apparatus 100 may instead of the processing circuitry 130 comprise an interface configured to output the output 125 of the pixel arrangement 120 for at least the (first) measurement frame to external circuitry.

The control signal 103 and the drive signal 104 may, e.g., be generated (provided) by the processing circuitry 130 or a separate control circuitry (not illustrated in Fig. 1) of the apparatus 100. For example, the control signal 103 and the drive signal 104 may be generated based on control data (control instructions) stored in a memory of the apparatus 100.

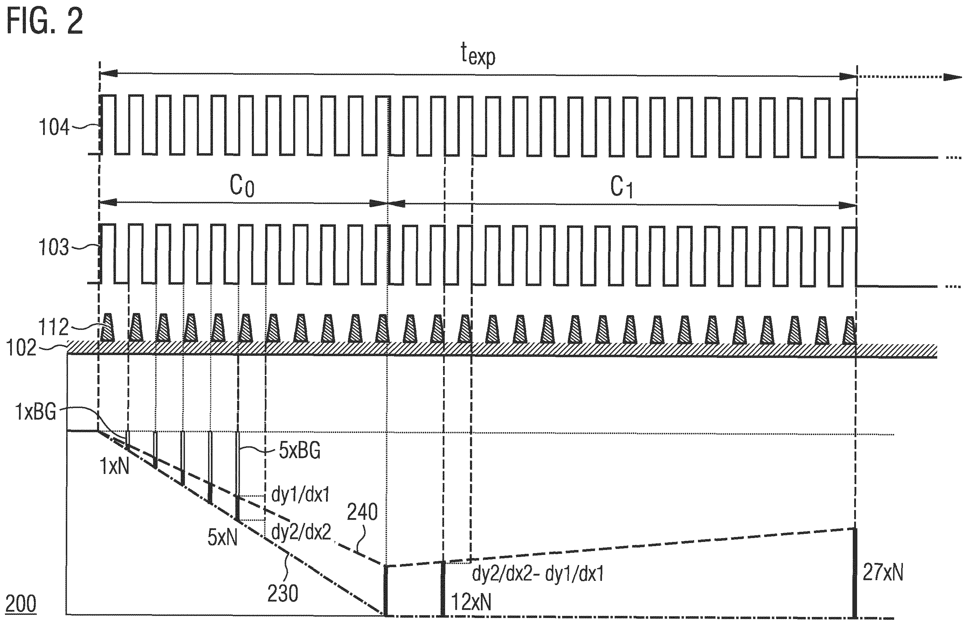

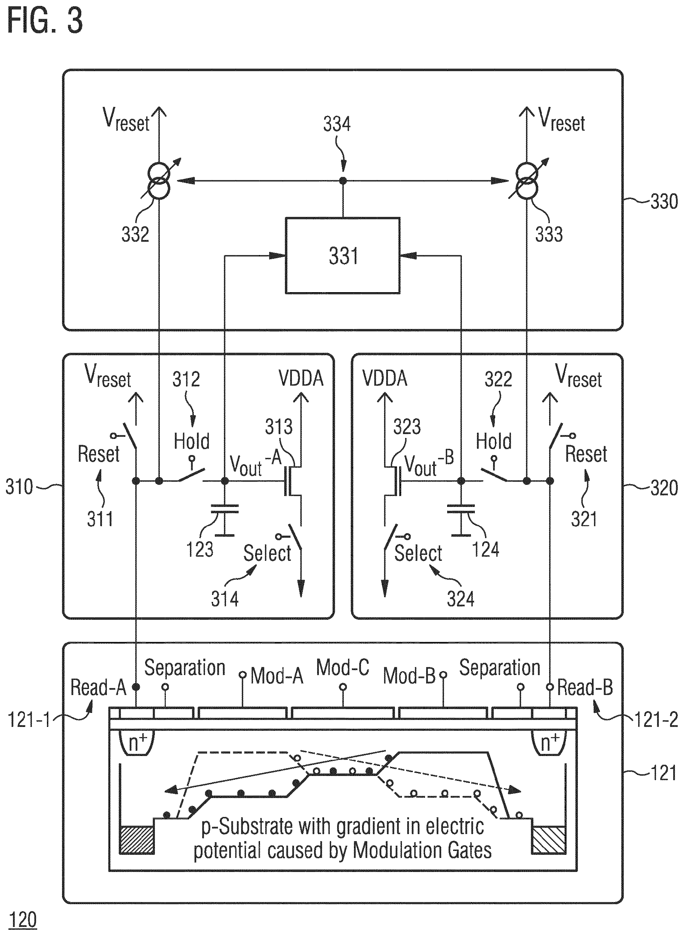

As described above, the at least one photo-sensitive pixel 121, 122 may be implemented in various ways. In the following, a first exemplary implementation will be described with reference to Fig. 2 and Fig. 3. In the first exemplary implementation, the at least one photo-sensitive pixel 121, 122 is configured to separate the charge carriers generated in the photo-sensitive pixel 121, 122 the measurement frame based on the control signal 103. The control signal 103 is used to control the separation of the charge carriers generated in the photo-sensitive pixel 121, 122 during the measurement frame(s).

For example, the at least one photo-sensitive pixel 121, 122 may comprise a PMD or a CCD to separate, based on the control signal 103, the charge carriers generated in the photo-sensitive pixel 121, 122 during the measurement frame(s). The at least one photo-sensitive pixel 121, 122 may comprise internal control structures - such as gated transistors, switches or electric potentials - controlled by the control signal 103 to selectively guide and direct the generated charge carriers into one of the two available storages 123 and 124 based on timing information provided by the control signal 103. The internal control structures dynamically alter the pixel's internal electric potential based on the control signal 103 to selectively separate the generated charge carriers and route them into one of the two available storages 123 and 124. In other words, the pixel arrangement 120 may generate fields that exert forces selectively dragging (pulling) the charge carriers toward one of the two available storages 123 and 124. Consequently, the pixel arrangement 120 may integrate charge carriers separately into each charge storage 123, 124 at predefined phases within each measurement cycle. This dynamic routing enables the at least one photo-sensitive pixel 121, 122 to perform time-gated integration, selectively capturing the desired photons of the NIR spectroscopy light 112 while effectively suppressing the unwanted photons from the background light 102.

This will be explained in greater detail in the following with reference to timing diagram 200 illustrated in **Fig.** 2. In the example of Fig. 2, two measurement cycles C₀ and C₁ are exemplarily illustrated. However, as described above, any number N ≥ 2 of measurement cycles may be used.

The emission times of the modulated NIR light 111 by the illumination source 110 are illustrated in Fig. 2 via the drive signal 104. As described above, the drive signal 104 drives the illumination source 110 and controls the emission of the modulated NIR light 111 by the illumination source 110. When the drive signal 104 is high, the illumination source 110 emits the modulated NIR light 111. As indicated by the pulses of the drive signal 104, the illumination source 110 may be configured (controlled) to emit the respective first pulse of the modulated NIR light 111 at the beginning of the respective measurement cycle, and to repetitively emit further pulses of the modulated NIR light 111 throughout the respective measurement cycle. In other words, the illumination source 110 may be configured (controlled) to emit multiple pulses of the modulated NIR light 111 in the respective measurement cycle. The number of pulses per measurement cycle shown in Fig. 2 is for illustrative purposes. Any other number K ≥ 2 of NIR light pulses may be emitted.

An exemplary temporal course (shape) of the control signal 103 is illustrated in Fig. 2. When the control signal 103 is high, the at least one photo-sensitive pixel 121, 122 separates the charge carriers to vary the charge level of (e.g., only, exclusively) the first charge storage 123. When the control signal 103 is low, the at least one photo-sensitive pixel 121, 122 separates the charge carriers to vary the charge level of (e.g., only, exclusively) the second charge storage 124. However, it should be noted that in alternative examples the response of the at least one photo-sensitive pixel 121, 122 to the signal levels of the control signal 103 may be reversed.

The above described control of the illumination source 110 and the at least one photo-sensitive pixel 121, 122 will be described exemplarily for the first measurement cycle C₀ illustrated in Fig. 2. At the beginning of the first measurement cycle C₀, the illumination source 110 is configured (controlled) to emit the NIR light 111. The emitted NIR light 111 interacts with the sample 101. This interaction produces a measurable NIR spectroscopy light 112 that is directly linked to the sample 101's properties. The NIR spectroscopy light 112 is, hence, the result of the interaction of the modulated NIR light 111 with the sample 101. For example, the light 112 may be reflected, transmitted or transflected light.

During the emission of the modulated NIR light 111, the control signal 103 is high to control the at least one photo-sensitive pixel 121, 122 to separate the charge carriers to vary the charge level of (e.g., only, exclusively) the first charge storage 123. Accordingly, the NIR spectroscopy light 112 caused by the interaction of the modulated NIR light 111 with the sample 101 is measured by the at least one photo-sensitive pixel 121, 122 and integrated into the first charge storage 123 together with the background light 102.

Then, the illumination source 110 stops emitting the emission of the NIR light 111. During these "off" period, the at least one photo-sensitive pixel 121, 122 continues to receive the background light 102, which results from environmental lighting conditions (room lights, sunlight, reflections, stray light, etc.). During absence of emission of the NIR light 111, the control signal 103 is low to control the at least one photo-sensitive pixel 121, 122 to separate the charge carriers to vary the charge level of (e.g., only, exclusively) the second charge storage 124. Accordingly, the background light 102 is captured by the second charge storage 124.

The above is repeated multiple times in the first measurement cycle C₀. For example, n pulses of the NIR light 111 may be emitted in the first measurement cycle C₀.

The charge levels of the first charge storage 123 and the second charge storage 124 are exemplarily illustrated in the lower part of Fig. 2. Curve 230 shows the temporal course of the charge level of the first charge storage 123 over the measurement frame. Curve 240 shows the temporal course of the charge level of the second charge storage 124 over the measurement frame. The charge levels of both charge storages 123 and 124 are identical at the beginning of the measurement frame (e.g., the charge levels are at a predetermined reset charge level).

During the emission of the NIR light 111, the NIR spectroscopy light 112 and the background light 102 are incident on the at least one photo-sensitive pixel 121, 122. As the control signal 103 is high during the emission of the NIR light 111, the at least one photo-sensitive pixel 121, 122 is controlled to separate the charge carriers to vary (e.g., lower) the charge level of (e.g., only, exclusively) the first charge storage 123. The charge level of the second charge storage 124 remains unchanged as the charge carriers are not separated to vary the charge level of the second charge storage 124.

During absence of emission of the NIR light 111, substantially only the background light 102 is incident on the at least one photo-sensitive pixel 121, 122. As the control signal 103 is low during the emission of the excitation light 111, the at least one photo-sensitive pixel 121, 122 is controlled to separate the charge carriers to vary (e.g., lower) the charge level of (e.g., only, exclusively) the second charge storage 124. The charge level of the first charge storage 123 remains unchanged as the charge carriers are not separated to vary the charge level of the first charge storage 123.

The difference between the charge levels of the charge storages 123 and 124 at the end of the first measurement cycle C₀ is *nₒ* · *N* with *N* denoting the charge level difference due to (caused by) the light 112 (the background light 102 is common mode for both charge storages 123 and 124) and *n*₀ denoting the number of emitted pulses of the NIR light 111 in the first measurement cycle C₀. As has become evident from the above, the apparatus 100 enables a time-gated signal capture and isolation of the light 112 caused by the interaction of the modulated NIR light 111 with the sample 101. As the background light 102 is stored in both charge storages 123 and 124, the interference from the background light 102 is greatly reduced.

As the control signal 103 governs the charge separation, precise control of which charge storage receives the charges during different phases of the measurement cycle is enabled. This flexibility ensures the apparatus 100 may adapt to various signal and background conditions, optimizing performance for different types of samples. In particular, other modulation codes than the 1010101... code used in the example of Fig. 2 for the control signal 103 may be used. The dual charge storage architecture and reference signal control may be implemented using existing sensor technologies, such as CCD or PMD-based designs. This may reduce the cost and complexity of manufacturing compared to expensive scientific cameras (requiring laborious external synchronization circuitry) or advanced filters. Furthermore, the apparatus 100 may be compact compared to conventional architectures like scientific cameras making it suitable for compact, cost-efficient applications such as handheld and wearable devices (e.g., mobile phones, tablet-computers, smart watches or other wearable devices).

In the example of Fig. 2, the at least one photo-sensitive pixel 121, 122 is configured to retain the charge levels of the two charge storages 123 and 124 at the end of each measurement cycle and use them as starting charge levels for the following measurement cycle. That is, the charge levels of the two charge storages 123 and 124 at the end of first measurement cycle C₀ are used as the starting charge levels for the second measurement cycle C₁ and so on. In other words, the charge levels of the two charge storages 123 and 124 are not reset at the end of a measurement cycle. This cumulative integration allows the apparatus 100 to build up weak NIR spectroscopy signals over multiple measurement cycles, significantly increasing the sensitivity of the apparatus 100 to detect low-intensity signals that would otherwise be undetectable in a single cycle. The consistent accumulation of charges may enhance the SNR, making it easier to distinguish NIR spectroscopy signals from the background noise.

The control of the illumination source 110 in the second measurement cycle C₁ is as described above for the first measurement cycle C₀.

At the end of the first measurement cycle C₀ and the beginning of the second measurement cycle C₁, the first charge storage 123 saturates as shown in Fig. 2. That is, the first charge storage 123 reaches a physical limit (e.g., full well capacity of the first charge storage 123) such that it can no longer accommodate additional charges. In the example of Fig. 2, the charge storages 123 and 124 are "integrating down" such that the first charge storage 123 reaches its minimum capacity to hold charges.

Upon saturation of the first charge storage 123, the pixel arrangement 120 is configured to vary the charge level of the second charge storage 124 by an amount corresponding to the variation that the charge level of the saturated first charge storage 123 would undergo in absence of saturation. In absence of the saturation, the charge levels of both charge storages 123 and 124 would be varied due to the alternating integration of a) the NIR spectroscopy light 112 plus the background light 102 and b) only the background light 102 - analogously to what is described above for the first measurement cycle C₀. Therefore, the charge level of the second charge storage 124 is increased such that the difference between the charge levels of the charge storages 123 and 124 at the end of the second measurement cycle C₁ is *n*₀ · *N* + *n₁* · *N* with *n*₁ denoting the number of emitted pulses of the NIR light 111 in the second measurement cycle C₁. The background light 102 effectively does not contribute to the charge level of the second charge storage 123 as it would be identical for both charge storages 123 and 124 in absence of saturation. In other words, upon saturation of the first charge storage 123, the first charge storage 123 remains at the saturation charge level and only the second charge storage 124 integrates charge carriers at an amount corresponding to the variation that the charge level of the saturated first charge storage 123 would undergo in absence of saturation.

The charge level of the non-saturated second charge storage 124 is increased by the pixel arrangement 120, i.e., the pixel arrangement 120 is configured to change a direction of varying the charge level of the second charge storage 124 upon saturation of the first charge storage 123. The direction of varying the charge level is the manner in which the charge level of a charge storage is adjusted, either by increasing or decreasing the stored charge. The direction of varying determines whether charges are added to or subtracted from the charge storage 123, 124.

In further measurement cycles C₂, C₃, ..., the first charge storage 123 would remain saturated. In absence of the saturation, the charge levels of both charge storages 123 and 124 would be varied due to the alternating integration of a) the NIR spectroscopy light 112plus the background light 102 and b) only the background light 102 in the respective measurement cycle C₂, C₃, ... - analogously to what is described above for the first measurement cycle C₀. The charge level difference due to (caused by) the NIR spectroscopy light 112 would again be *nᵢ* · *N* for the respective measurement cycle C₂, C₃, ... (with *nᵢ* denoting the number of emitted pulses of the NIR light 111 in the respective measurement cycle C₂, C₃, ...). Therefore, the charge level of the second charge storage 124 is increased such in each of the next measurement cycles C₂, C₃, ... that the difference between the charge levels of the charge storages 123 and 124 increases by *nᵢ* · *N* in each of the next measurement cycles C₂, C₃, ....

Accordingly, after *k* measurement cycles with in total *nₖ* = *n₁ + n₂* + ··· emitted pulses of the NIR light 111, the difference between the charge levels of the charge storages 123 and 124 is *nₖ · N.* The output 125 of the pixel arrangement 120 for the measurement frame is based on the voltage difference corresponding to the charge level difference *nₖ · N* between the charge storages 123 and 124.

The above described functionality of the pixel arrangement 120 may ensure that information about the incident light is preserved, even when one charge storage saturates. It enables continued measurement and maintains data accuracy despite saturation. By compensating for saturation, the apparatus 100 allows for uninterrupted operation and reliable signal accumulation over the measurement frame. Reversing the direction of variation prevents the non-saturated storage from exceeding its capacity. This may extend the operational range of the apparatus 100 and avoid cascading saturation.

In the example of Fig. 2, the first charge storage 123 saturates. However, it should be noted that in other examples the second charge storage 124 may saturate. The apparatus 100 reacts analogously to what is described to the saturation of the second charge storage 124. In other words, upon saturation of either of the two charge storages 123 and 124 occurring during the measurement frame, the pixel arrangement 120 is configured to vary the charge level of the other charge storage by an amount corresponding to the variation that the charge level of the saturated charge storage would undergo in absence of saturation. Furthermore, upon saturation of either of the two charge storages 123 and 124 occurring during the measurement frame, the pixel arrangement 120 is configured to change a direction of varying the charge level of the other charge storage (from increasing to decreasing, or vice versa). This mechanism ensures that the difference between the charge carrier levels of each charge storage remains valid despite the fact that one charge storages has reached its saturation limit.

**Fig. 3** shows an exemplary configuration of the pixel arrangement 120 for providing the above described functionality upon saturation of either of the two charge storages 123 and 124. In the example of Fig. 3, the photo-sensitive pixel 121 is a PMD. The working principle of the PMD is known to those skilled in the art and will not be explained in detail.

Each of two read-out terminals 121-1 and 121-2 of the photo-sensitive pixel 121 is coupled to a corresponding read-out circuitry 310, 320 of the pixel arrangement 120. The charge storages 123 and 124 are part of the read-out circuitries 310 and 320. The read-out circuitries 310 and 320 are both four transistor devices and implemented identically.

At the beginning of the measurement frame, a respective first transistor (reset transistor) 311, 321 and a second transistor 312, 322 of the read-out circuitries 310 and 320 are closed to couple the charge storages 123 and 124 to a reset voltage *Vᵣₑₛₑₜ* and, hence, set the charge levels of both charge storages 123 and 124 to a predetermined reset charge level. The respective first transistor 311, 321 is then opened.

During the emission of the NIR light 111 as well as the "off" periods of the measurement cycles, the closed second transistors 312 and 322 couple the charge storages 123 and 124 to the two read-out terminals 121-1 and 121-2 of the photo-sensitive pixel 121 such that the charge carriers generated in the photo-sensitive pixel 121 interact with the charge storages 123 and 124 and
a) vary the charge level of (e.g., only, exclusively) the first charge storage 123 (e.g., discharge the second charge storage 124) during the emission of the modulated NIR light 111 in the respective measurement cycle; and
b) vary the charge level of (e.g., only, exclusively) the second charge storage 124 (e.g., discharge the first charge storage 123) during absence of emission of the modulated NIR light 111 in the respective measurement cycle.

The pixel arrangement 120 further comprises saturation circuitry 330. The saturation circuitry 330 comprises control circuitry 331 and two controllable current sources 332 and 333 - one for each charge storage. The control circuitry 331 controls the two current sources 332 and 333 with the same control signal 334 (e.g., a control voltage).

The control circuitry 331 (e.g., continuously) monitors the charge levels of the first and second charge storages 123 and 124. If the control circuitry 331 detects saturation of either of the two charge storages 123 and 124, the control circuitry 331 controls the two current sources 332 and 333 via the same control signal 334 to adjust their output current to limit (restrict) the accumulation of further charge carriers in the saturated charge storage (e.g., the first charge storage 123 as in the example of Fig. 2). As the current presented by the two current sources 332 and 333 to the two charge storages 123 and 124 is identical, voltage changes identical for both charge storages 123 and 124 such that the voltage difference between both charge storages 123 and 124 remains unaffected by the saturation of the one charge storage. The saturation circuitry 330 ensures that identical current is drawn from (or supplied to) both charge storages 123 and 124, so any additional incoming charge carriers effectively translate into changes only in the non-saturated charge storage. Accordingly, the charge level of the non-saturated charge storage is varied such that the difference between the charge levels of the charge storages 123 and 124 varies like in absence of saturation. Accordingly, the voltage difference between the charge storages 123 and 124 remains representative of the measurement despite saturation.

By opening the second transistors 312 and 322 and closing fourth transistors 314 and 324, the charge levels of (voltage difference between) the charge storages 123 and 124 are read via the load transistors 313 and 323 (providing stable readout operation) at the end of the measurement frame.

In the examples of Fig. 2 and Fig. 3, a single photo-sensitive pixel is used to control the charge levels of the charge storages 123 and 124. However, in alternative examples, two photo-sensitive pixels may be used to control the charge levels in the charge storages 123 and 124. This allows to use simpler pixels such as conventional CMOS image sensor pixels. This will be described in greater detail below with reference to Fig. 1.

In these examples, the first photo-sensitive pixel 121 is configured to integrate the incident light for varying the charge level of the first charge storage 123. The second photo-sensitive pixel 122 configured to integrate the incident light for varying the charge level of the second charge storage 124. In other words, two separate photo-sensitive pixels 121 and 122 are used - one dedicated to integrating light into the first charge storage 123 and the other to the second charge storage 124.

The control signal 103 is used to operate these two photo-sensitive pixels 121 and 122 in different phases of each measurement cycle. In particular, the control signal 103 may be configured to:
a) control the first photo-sensitive pixel 121 to integrate the incident light during the emission of the modulated NIR light 111 such that the charge carriers vary the charge level of (e.g., only, exclusively) the first charge storage 123 during the emission of the modulated NIR light 111; and
b) control the second photo-sensitive pixel 122 to integrate the incident light in absence of emission of the modulated NIR light 111 such that the charge carriers vary the charge level of (e.g., only, exclusively) the second charge storage 124 in absence of emission of the modulated NIR light 111.

During the emission of the modulated NIR light 111, the control signal 103 directs the first photo-sensitive pixel 121 to integrate the incident light, which causes the charge level in (e.g., only, exclusively) the first charge storage 123 to change in response to the collected photons (for example, by discharging it). This ensures that the charge carriers caused by the interaction of the modulated NIR light 111 with the sample 101 directly vary (e.g., decrease voltage as charges accumulate) the charge level of (e.g., only, exclusively) the first storage 123. Accordingly, the first storage 123 primarily records the NIR spectroscopy signal caused by the interaction of the modulated NIR light 111 with the sample 101 (plus the unavoidable background light 102). In absence of emission of the modulated NIR light 111, i.e., during the "off" periods of the measurement cycles, the control signal 103 directs the second photo-sensitive pixel 122 to integrate the incident light, which causes the charge level in (e.g., only, exclusively) the second charge storage 124 to change in response to the collected photons (for example, by discharging it). Because both photo-sensitive pixels 121 and 122 alternately integrate the background light 102, the unwanted background light 102 becomes a common-mode component. This cancels the background light 102 as it appears similarly in both charge storages 123 and 124.

Controlling the photo-sensitive pixels 121 and 122 via the control signal 103 as described above enables temporal isolation of the NIR spectroscopy light 112 from the background light 102. The variation of the charge levels of both charge storages 123 and 124 is analogous to what is described above with reference to Fig. 2 assuming that (e.g., only, exclusively) the first photo-sensitive pixel 121 integrates the incident light when the control signal 103 is high, and that (e.g., only, exclusively) the second photo-sensitive pixel 122 integrates the incident light when the control signal 103 is low.

However, the handling of saturation of either of the first and the second charge storage 123 and 124 during the measurement frame is different. Upon saturation of either of the first and the second charge storage 123 and 124 occurring during the measurement frame, the apparatus 100 is configured to change the duration of the measurement frame iteratively and repeat the measurement until neither the first nor the second charge storage 123, 124 saturates during the measurement frame. In other words, the duration of the measurement frame and, hence, the integration time of the photo-sensitive pixels 121 and 122 is modified and the measurement is repeated until both charge storages 123 and 124 remain unsaturated throughout the measurement frame

This approach extends the dynamic range of the apparatus 100 by preventing the loss of signal information due to saturation, which is particularly beneficial when detecting the NIR spectroscopy signal. By ensuring that the charge storages 123 and 124 do not saturate, the differential measurement - obtained by comparing the voltages of the two charge storages 123 and 124 - accurately reflects the true intensity of the NIR spectroscopy signal without being compromised by excessive charge accumulation.

In case the at least one photo-sensitive pixel 121 and 122 is configured to separate the charge carriers generated in the photo-sensitive pixel 121, 122 during the measurement frame based on the control signal 103, changing the duration of the measurement frame iteratively and repeat the measurement until neither the first nor the second charge storage 123, 124 saturates during the measurement frame may alternatively be used to the approach described above with reference to Fig. 2 and Fig.3. This may allow to omit the saturation circuitry 330.

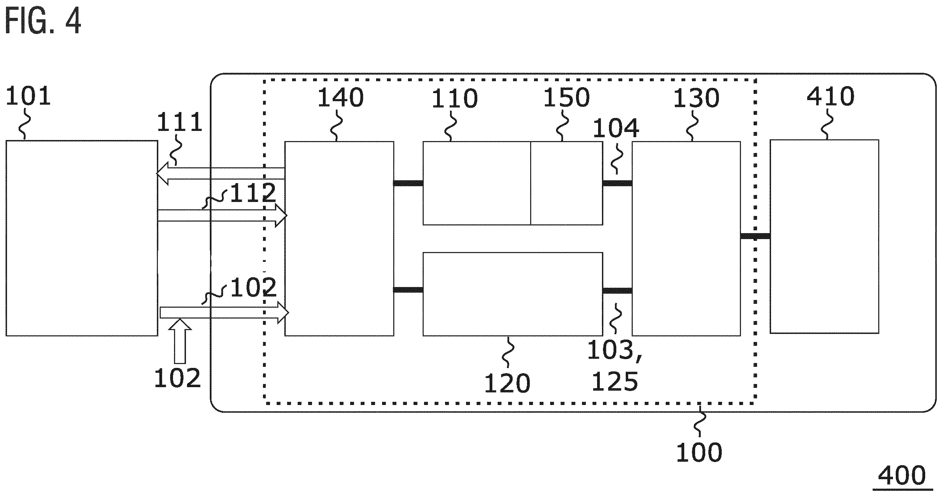

**Fig. 4** schematically illustrates a handheld or wearable device 400. For example, the handheld and wearable device 400 may be one of a mobile phone, a tablet-computer, a smart watch, a wearable medical device for non-invasive glucose monitoring, a wearable blood vessel pattern determination device or another wearable device. The handheld or wearable device 400 comprises an apparatus 100 for NIR spectroscopy as described herein.

The pixel arrangement 120 with dual charge storages, precise time-gated measurement, and effective suppression of the background light 102 makes the apparatus 100 particularly suited for integration into compact, portable devices. The handheld or wearable device 400 benefits from the apparatus 100's enhanced sensitivity and accuracy, allowing robust and reliable real-time measurements of physiological parameters such as blood glucose concentration, blood lactate concentration or blood vessel patterns. The practical advantages provided by the apparatus 100 - like improved accuracy, real-time feedback, low complexity, and reduced cost - allow immediate, non-destructive, and precise molecular-level assessments.

Fig. 4 further highlights that the apparatus 100 may optional further comprise driver circuitry 150 for driving the emission of the modulated NIR light 111 by the light source 110. For example, the driver circuitry 150 may drive the light source 110 based on the drive signal 104. The drive signal 104 may be provided by the processing circuitry 130 as illustrated in Fig. 4 or alternatively by a dedicated control circuitry of the apparatus 100 (not illustrated).

According to examples, the handheld or wearable device 400 may optionally further comprise a Human-Machine Interface (HMI) 410 such as a display, in particular a touch-sensitive display. The HMI 410 allows to display or otherwise output the determined characteristic(s) of the sample 110. In other examples, the HMI 410 may allow a user to input control commands for controlling performance of the NIR spectroscopy by the apparatus 100.

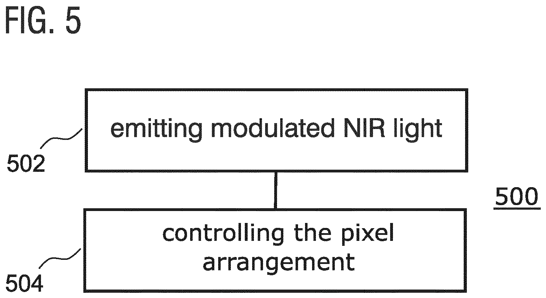

For further highlighting the NIR spectroscopy technology described above, **Fig. 5** illustrates a flowchart of a method 500 for NIR spectroscopy using a pixel arrangement. The pixel arrangement comprises at least one photo-sensitive pixel. The pixel arrangement comprises a first charge storage and a second charge storage having respective charge levels configured to vary in response to interactions with charge carriers generated by the pixel arrangement. The method 500 comprises emitting 502, for a plurality of measurement cycles in a measurement frame, modulated NIR light for interaction with a sample. The charge carriers are controlled by the pixel arrangement to interact with the charge storages in response to the modulated NIR light based on a control signal. Additionally, the method 500 comprises controlling 504 the pixel arrangement via the control signal in each measurement cycle to cause the charge carriers to a) vary the charge level of the first charge storage during emission of the modulated NIR light for measuring a result of the interaction of the modulated NIR light with the sample; and b) vary the charge level of the second charge storage in absence of emission of the modulated NIR light.

Analogously to what is described above, the method 500 enables accurate detection of the NIR spectroscopy signal caused by the interaction of the modulated NIR light with the sample due to the time-gated signal capture and isolation of the NIR spectroscopy light. The method 500 may be implemented using existing sensor technologies, such as CMOS, CCD or PMD-based pixel designs, reducing the cost and complexity compared to expensive scientific cameras.

More details and aspects of the method 500 are explained in connection with the proposed technique or one or more examples described above (e.g., Fig. 1 to Fig. 4). The method 500 may comprise one or more additional optional features corresponding to one or more aspects of the proposed technique or one or more examples described above.

As described above, the apparatus 100, the handheld or wearable device 400 as well as the method 500 may be used for various applications. Particularly, the apparatus 100, the handheld or wearable device 400, and the method 500 may be used for determining a physiological property of an organism.

Examples of the present disclosure may provide a time-gated NIR sensor using conventional imaging sensor technology.

The examples as described herein may be summarized as follows:
An example (e.g., example 1) relates to an apparatus for NIR spectroscopy. The apparatus comprises an illumination source configured to emit, for a plurality of measurement cycles in a measurement frame, modulated NIR light for interaction with a sample. Additionally, the apparatus comprises a pixel arrangement. The pixel arrangement comprises at least one photo-sensitive pixel. The pixel arrangement comprises a first charge storage and a second charge storage having respective charge levels configured to vary in response to interactions with charge carriers generated by the pixel arrangement. The charge carriers are controlled by the pixel arrangement to interact with the charge storages in response to the modulated NIR light based on a control signal. The control signal is configured to control the pixel arrangement in each measurement cycle to cause the charge carriers to a) vary the charge level of the first charge storage during emission of the modulated NIR light for measuring a result of the interaction of the modulated NIR light with the sample; and b) vary the charge level of the second charge storage in absence of emission of the modulated NIR light.

Another example (e.g., example 2) relates to a previous example (e.g., example 1) or to any other example, wherein the pixel arrangement is configured to retain the charge levels of the charge storages at the end of each measurement cycle and use them as starting charge levels for the following measurement cycle.

Another example (e.g., example 3) relates to a previous example (e.g., one of the examples 1 or 2) or to any other example, wherein that the at least one photo-sensitive pixel is configured to separate the charge carriers generated in the photo-sensitive pixel during the measurement frame based on the control signal.

Another example (e.g., example 4) relates to a previous example (e.g., example 3) or to any other example, wherein, upon saturation of either of the first and second charge storages occurring during the measurement frame, the pixel arrangement is configured to vary the charge level of the other charge storage by an amount corresponding to the variation that the charge level of the saturated charge storage would undergo in absence of saturation.

Another example (e.g., example 5) relates to a previous example (e.g., example 4) or to any other example, wherein, upon saturation of either of the first and second charge storages occurring during the measurement frame, the pixel arrangement is configured to change a direction of varying the charge level of the other charge storage.

Another example (e.g., example 6) relates to a previous example (e.g., one of the examples 1 or 2) or to any other example, wherein the pixel arrangement comprises a first photo-sensitive pixel configured to integrate incident light for varying the charge level of the first charge storage, and a second photo-sensitive pixel configured to integrate the incident light for varying the charge level of the second charge storage, and wherein the control signal is configured to control the first photo-sensitive pixel to integrate the incident light during the emission of the modulated NIR light such that the charge carriers vary the charge level of the first charge storage during the emission of the modulated NIR light, and control the second photo-sensitive pixel to integrate the incident light in absence of emission of the modulated NIR light such that the charge carriers vary the charge level of the second charge storage in absence of emission of the modulated NIR light.

Another example (e.g., example 7) relates to a previous example (e.g., one of the examples 1, 2, 3 or 6) or to any other example, wherein, upon saturation of either of the first and the second charge storage occurring during the measurement frame, the apparatus is configured to change a duration of the measurement frame iteratively and repeat the measurement until neither the first nor the second charge storage saturates during the measurement frame.

Another example (e.g., example 8) relates to a previous example (e.g., one of the examples 1 to 7) or to any other example, wherein during a second measurement frame, the control signal is inverted compared to the measurement frame to control the pixel arrangement to cause the charge carriers to vary the charge level of the second charge storage during the emission of the modulated NIR light.

Another example (e.g., example 9) relates to a previous example (e.g., example 8) or to any other example, wherein, in the second measurement frame, the control signal is configured to control the pixel arrangement to cause the charge carriers to vary the charge level of the first charge storage in absence of emission of the modulated NIR light.

Another example (e.g., example 10) relates to a previous example (e.g., one of the examples 1 to 9) or to any other example, further comprising processing circuitry configured to determine a characteristic of the sample based on an output of the pixel arrangement for the measurement frame.

Another example (e.g., example 11) relates to a previous example (e.g., example 10) or to any other example, wherein the processing circuitry is configured to determine a characteristic of the sample based on an average determined based on the outputs of the pixel arrangement for the measurement frame and the second measurement frame.

Another example (e.g., example 12) relates to a previous example (e.g., one of the examples 10 or 11) or to any other example, wherein the sample is an organism and the characteristic of the sample is a physiological property of the organism.

Another example (e.g., example 13) relates to a previous example (e.g., example 12) or to any other example, wherein the physiological property is at least one of a blood glucose value, a blood lactate value or a blood vessel pattern of the organism.

Another example (e.g., example 14) relates to a previous example (e.g., one of the examples 1 to 13) or to any other example, further comprising optics configured to focus incident light onto the at least one photo-sensitive pixel, wherein the at least one photo-sensitive pixel is configured to generate the charge carriers based on the incident light.

Another example (e.g., example 15) relates to a previous example (e.g., example 14) or to any other example, wherein the optics is further configured to focus the modulated NIR light onto the sample.

Another example (e.g., example 16) relates to a handheld or wearable device comprising an apparatus for NIR spectroscopy according to a previous example (e.g., one of the examples 1 to 15) or to any other example.

An example (e.g., example 17) relates to a method for NIR spectroscopy using a pixel arrangement. The pixel arrangement comprises at least one photo-sensitive pixel. The pixel arrangement comprises a first charge storage and a second charge storage having respective charge levels configured to vary in response to interactions with charge carriers generated by the pixel arrangement. The method comprises emitting, for a plurality of measurement cycles in a measurement frame, modulated NIR light for interaction with a sample. The charge carriers are controlled by the pixel arrangement to interact with the charge storages in response to the modulated NIR light based on a control signal. Additionally, the method comprises controlling the pixel arrangement via the control signal in each measurement cycle to cause the charge carriers to a) vary the charge level of the first charge storage during emission of the modulated NIR light for measuring a result of the interaction of the modulated NIR light with the sample; and b) vary the charge level of the second charge storage in absence of emission of the modulated NIR light.

Another example (e.g., example 18) relates to use of the apparatus according to according to a previous example (e.g., one of the examples 1 to 15) or to any other example, the handheld or wearable device according to a previous example (e.g., example 16) or to any other example, or the method according to a previous example (e.g., example 17) or to any other example for determining a physiological property of an organism.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (100) for Near-InfraRed, NIR, spectroscopy, comprising:
an illumination source (110) configured to emit, for a plurality of measurement cycles in a measurement frame, modulated NIR light (111) for interaction with a sample (101); and
a pixel arrangement (120), the pixel arrangement (120) comprising at least one photo-sensitive pixel (121, 122), the pixel arrangement (120) comprising a first charge storage (123) and a second charge storage (124) having respective charge levels configured to vary in response to interactions with charge carriers generated by the pixel arrangement (120), the charge carriers being controlled by the pixel arrangement (120) to interact with the charge storages (123, 124) in response to the modulated NIR light (111) based on a control signal (103), and the control signal (103) being configured to control the pixel arrangement (120) in each measurement cycle to cause the charge carriers to:
vary the charge level of the first charge storage (123) during emission of the modulated NIR light (111) for measuring a result of the interaction of the modulated NIR light (111) with the sample (101); and
vary the charge level of the second charge storage (124) in absence of emission of the modulated NIR light (111).

2. The apparatus (100) of claim 1, wherein the pixel arrangement (120) is configured to retain the charge levels of the charge storages (123, 124) at the end of each measurement cycle and use them as starting charge levels for the following measurement cycle.

3. The apparatus (100) of claim 1 or claim 2, wherein the at least one photo-sensitive pixel (121, 122) is configured to separate the charge carriers generated in the photo-sensitive pixel during the measurement frame based on the control signal (103).

4. The apparatus (100) of claim 3, wherein, upon saturation of either of the first and second charge storages (123, 124) occurring during the measurement frame, the pixel arrangement (120) is configured to vary the charge level of the other charge storage by an amount corresponding to the variation that the charge level of the saturated charge storage would undergo in absence of saturation.

5. The apparatus (100) of claim 4, wherein, upon saturation of either of the first and second charge storages (123, 124) occurring during the measurement frame, the pixel arrangement (120) is configured to change a direction of varying the charge level of the other charge storage.

6. The apparatus (100) of claim 1 or claim 2, wherein the pixel arrangement (120) comprises a first photo-sensitive pixel configured to integrate incident light for varying the charge level of the first charge storage (123), and a second photo-sensitive pixel configured to integrate the incident light for varying the charge level of the second charge storage (124), and wherein the control signal (103) is configured to:
control the first photo-sensitive pixel to integrate the incident light during the emission of the modulated NIR light (111) such that the charge carriers vary the charge level of the first charge storage (123) during the emission of the modulated NIR light (111); and
control the second photo-sensitive pixel to integrate the incident light in absence of emission of the modulated NIR light (111) such that the charge carriers vary the charge level of the second charge storage (124) in absence of emission of the modulated NIR light (111).

7. The apparatus (100) of any one of claims 1, 2, 3 or 6, wherein, upon saturation of either of the first and the second charge storage (124) occurring during the measurement frame, the apparatus (100) is configured to change a duration of the measurement frame iteratively and repeat the measurement until neither the first nor the second charge storage (123, 124) saturates during the measurement frame.

8. The apparatus (100) of any one of claims 1 to 7, wherein, during a second measurement frame, the control signal (103) is inverted compared to the measurement frame to control the pixel arrangement (120) to cause the charge carriers to vary the charge level of the second charge storage (124) during the emission of the modulated NIR light (111).

9. The apparatus (100) of claim 8, wherein, in the second measurement frame, the control signal (103) is configured to control the pixel arrangement (120) to cause the charge carriers to vary the charge level of the first charge storage (123) in absence of emission of the modulated NIR light (111).

10. The apparatus (100) of any one of claims 1 to 9, further comprising processing circuitry (130) configured to determine a characteristic of the sample (101) based on an output of the pixel arrangement (120) for the measurement frame.

11. The apparatus (100) of claim 10 when dependent on one of claims 8 and 9, wherein the processing circuitry (130) is configured to determine a characteristic of the sample (101) based on an average determined based on the outputs of the pixel arrangement (120) for the measurement frame and the second measurement frame.

12. The apparatus (100) of any one of claims 1 to 11, further comprising optics (140) configured to focus incident light onto the at least one photo-sensitive pixel (121, 122), wherein the at least one photo-sensitive pixel (121, 122) is configured to generate the charge carriers based on the incident light.

13. A handheld or wearable device (400) comprising an apparatus (100) for NIR spectroscopy according to any one of claims 1 to 12.

14. A method (500) for Near-InfraRed, NIR, spectroscopy using a pixel arrangement, the pixel arrangement comprising at least one photo-sensitive pixel, the pixel arrangement comprising a first charge storage and a second charge storage having respective charge levels configured to vary in response to interactions with charge carriers generated by the pixel arrangement, and the method (500) comprising:
emitting (502), for a plurality of measurement cycles in a measurement frame, modulated NIR light for interaction with a sample, the charge carriers being controlled by the pixel arrangement to interact with the charge storages in response to the modulated NIR light based on a control signal; and
controlling (504) the pixel arrangement via the control signal in each measurement cycle to cause the charge carriers to:
vary the charge level of the first charge storage during emission of the modulated NIR light for measuring a result of the interaction of the modulated NIR light with the sample; and
vary the charge level of the second charge storage in absence of emission of the modulated NIR light.

15. Use of the apparatus (100) according to any one of claim 1 to 12, the handheld or wearable device (400) of claim 13 or the method (500) of claim 14 for determining a physiological property of an organism.

## Amended claims

### Amended claims in accordance with Rule 137(2) EPC.

1. An apparatus (100) for Near-InfraRed, NIR, spectroscopy, comprising:
an illumination source (110) configured to emit, for a plurality of measurement cycles in a measurement frame, modulated NIR light (111) for interaction with a sample (101); and
a pixel arrangement (120), the pixel arrangement (120) comprising at least one photo-sensitive pixel (121, 122), the pixel arrangement (120) comprising a first charge storage (123) and a second charge storage (124) having respective charge levels configured to vary in response to interactions with charge carriers generated by the pixel arrangement (120),
the charge carriers being controlled by the pixel arrangement (120) to interact with the charge storages (123, 124) in response to the modulated NIR light (111) based on a control signal (103), and the control signal (103) being configured to control the pixel arrangement (120) in each measurement cycle to cause the charge carriers to:
vary the charge level of the first charge storage (123) during emission of the modulated NIR light (111) for measuring light (112) resulting from the interaction of the modulated NIR light (111) with the sample (101), the light (112) resulting from the interaction of the modulated NIR light (111) with the sample (101) being the modulated NIR light (111) after reflection, transmission or transflection by the sample (101); and
vary the charge level of the second charge storage (124) in absence of emission of the modulated NIR light (111).

2. The apparatus (100) of claim 1, wherein the pixel arrangement (120) is configured to retain the charge levels of the charge storages (123, 124) at the end of each measurement cycle and use them as starting charge levels for the following measurement cycle.

3. The apparatus (100) of claim 1 or claim 2, wherein the at least one photo-sensitive pixel (121, 122) is configured to separate the charge carriers generated in the photo-sensitive pixel during the measurement frame based on the control signal (103).

4. The apparatus (100) of claim 3, wherein, upon saturation of either of the first and second charge storages (123, 124) occurring during the measurement frame, the pixel arrangement (120) is configured to vary the charge level of the other charge storage by an amount corresponding to the variation that the charge level of the saturated charge storage would undergo in absence of saturation.

5. The apparatus (100) of claim 4, wherein, upon saturation of either of the first and second charge storages (123, 124) occurring during the measurement frame, the pixel arrangement (120) is configured to change a direction of varying the charge level of the other charge storage.

6. The apparatus (100) of claim 1 or claim 2, wherein the pixel arrangement (120) comprises a first photo-sensitive pixel configured to integrate incident light for varying the charge level of the first charge storage (123), and a second photo-sensitive pixel configured to integrate the incident light for varying the charge level of the second charge storage (124), and wherein the control signal (103) is configured to:
control the first photo-sensitive pixel to integrate the incident light during the emission of the modulated NIR light (111) such that the charge carriers vary the charge level of the first charge storage (123) during the emission of the modulated NIR light (111); and
control the second photo-sensitive pixel to integrate the incident light in absence of emission of the modulated NIR light (111) such that the charge carriers vary the charge level of the second charge storage (124) in absence of emission of the modulated NIR light (111).

7. The apparatus (100) of any one of claims 1, 2, 3 or 6, wherein, upon saturation of either of the first and the second charge storage (124) occurring during the measurement frame, the apparatus (100) is configured to change a duration of the measurement frame iteratively and repeat the measurement until neither the first nor the second charge storage (123, 124) saturates during the measurement frame.

8. The apparatus (100) of any one of claims 1 to 7, wherein, during a second measurement frame, the control signal (103) is inverted compared to the measurement frame to control the pixel arrangement (120) to cause the charge carriers to vary the charge level of the second charge storage (124) during the emission of the modulated NIR light (111).

9. The apparatus (100) of claim 8, wherein, in the second measurement frame, the control signal (103) is configured to control the pixel arrangement (120) to cause the charge carriers to vary the charge level of the first charge storage (123) in absence of emission of the modulated NIR light (111).

10. The apparatus (100) of any one of claims 1 to 9, further comprising processing circuitry (130) configured to determine a characteristic of the sample (101) based on an output of the pixel arrangement (120) for the measurement frame.

11. The apparatus (100) of claim 10 when dependent on one of claims 8 and 9, wherein the processing circuitry (130) is configured to determine a characteristic of the sample (101) based on an average determined based on the outputs of the pixel arrangement (120) for the measurement frame and the second measurement frame.

12. The apparatus (100) of any one of claims 1 to 11, further comprising optics (140) configured to focus incident light onto the at least one photo-sensitive pixel (121, 122), wherein the at least one photo-sensitive pixel (121, 122) is configured to generate the charge carriers based on the incident light.

13. A handheld or wearable device (400) comprising an apparatus (100) for NIR spectroscopy according to any one of claims 1 to 12.

14. A method (500) for Near-InfraRed, NIR, spectroscopy using a pixel arrangement, the pixel arrangement comprising at least one photo-sensitive pixel, the pixel arrangement comprising a first charge storage and a second charge storage having respective charge levels configured to vary in response to interactions with charge carriers generated by the pixel arrangement, and the method (500) comprising:
emitting (502), for a plurality of measurement cycles in a measurement frame, modulated NIR light for interaction with a sample, the charge carriers being controlled by the pixel arrangement to interact with the charge storages in response to the modulated NIR light based on a control signal; and
controlling (504) the pixel arrangement via the control signal in each measurement cycle to cause the charge carriers to:
vary the charge level of the first charge storage during emission of the modulated NIR light for measuring light (112) resulting from the interaction of the modulated NIR light with the sample, the light (112) resulting from the interaction of the modulated NIR light (111) with the sample (101) being the modulated NIR light (111) after reflection, transmission or transflection by the sample (101); and
vary the charge level of the second charge storage in absence of emission of the modulated NIR light.

15. Use of the apparatus (100) according to any one of claim 1 to 12, the handheld or wearable device (400) of claim 13 or the method (500) of claim 14 for determining a physiological property of an organism.
